**Europäisches Patentamt**

**European Patent Office**

**Office européen des brevets**

(11) Numéro de publication: **0 001 961**
A2

# (12) DEMANDE DE BREVET EUROPEEN

(21) Numéro de dépôt: **78810019.6**

(22) Date de dépôt: **09.11.78**

(51) Int. Cl.²: **B 23 Q 39/04**
**B 23 B 11/00**

(30) Priorité: **09.11.77 CH 13654/77**

(43) Date de publication de la demande:
**16.05.79 Bulletin 79/10**

(84) Etats contractants désignés:
**CH DE FR GB**

(71) Demandeur: **TORNOS S.A. Fabrique de machines Moutier**
**111, rue Industrielle**
**CH-2740 Moutier(CH)**

(72) Inventeur: **Roquier, Francis**
**rue de la Courtine 21**
**CH-2740 Moutier(CH)**

(54) **Procédé d'usinage sur tour automatique.**

(57) Lors de l'utilisation de tours automatiques ceux-ci sont souvent pourvus d'un poste d'usinage secondaire, où la pièce est encore usinée après la coupe. Le procédé selon l'invention prévoit l'utilisation de tels tours automatiques, équipés de postes d'usinage secondaires pour l'usinage de pièces préalablement ébauchées. Selon le procédé, l'ébauche est chargée en premier lieu dans le poste d'usinage secondaire et ensuite dans le poste d'usinage principal. L'avantage obtenu consiste à pouvoir usiner dans un premier serrage une surface de référence servant au serrage dans la position d'usinage principale.

EP 0001 961 A2

·/.

0001961

## Procédé d'usinage sur tour automatique

La présente invention consiste en un procédé d'usinage, sur tour automatique comportant un poste d'usinage principal et un poste d'usinage secondaire, de pièces préalablement ébauchées.

Parfois on utilise des tours automatiques pour l'usinage à partir de pièces ébauchées. Dans ce cas la pièce est, en général, chargée sur la machine par un dispositif adéquat et serrée dans un mandrin. Ceci est le cas particulièrement pour les tours automatiques travaillant uniquement en mandrin, les tours multibroches à poupée fixe spécialement. Toutefois, la plupart des tours automatiques travaillant à la barre peuvent également être utilisés, en procédant à des modifications simples, pour des travaux de pièces ébauchées, chargées par un dispositif adéquat (Jäger H., Drehautomaten, Hanser München, 1967, p. 21, 72, 296 et suivantes).

Des tours automatiques avec un poste d'usinage principal et un ou plusieurs postes d'usinage secondaire existent depuis longtemps. Qu'il s'agisse de tours automatiques monobroches

0001961

ou multibroches, l'on entend par poste secondaire un dispositif muni d'un ou de plusieurs outils et d'un moyen de tenir
la pièce pendant l'usinage, dispositif étant monté sur le tour
et recevant la pièce par transport automatique après l'usinage
dans le poste principal. Un cas simple est celui de la vis faite
sur un tour monobroche. Dans la position principale on tourne
la jambe de la vis et effectue le filetage; la pièce étant
serrée du côté de la tête de la vis, il n'est pas possible
de fraiser la fente: lors de la coupe, si l'on travaille à la
barre, au desserrage si l'on travaille en mandrin, le transporteur vient prendre la pièce pour l'amener dans le poste
d'usinage secondaire où la tête est fendue par un appareil à
fraiser (brevet suisse 124 275).

Dans les tours automatiques multibroches on procède de la
même façon. Il existe toutefois des tours multibroches avec
un poste d'usinage secondaire plus sophistiqué comportant un
moyen porte-pièce indexable et plusieurs positions d'usinage
(brevet allemand DPS 12 03 572).

Il est évident qu'un tour automatique avec poste principal et
poste secondaire peut également être utilisé pour usiner des
pièces ébauchées.

Il existe toutefois un inconvénient très important en chargeant dans la broche ou le mandrin d'un tour des pièces
ébauchées par matriçage, par forgeage, qui ont été coulées
ou roulées. Etant donné que ces pièces ont une finition
grossière et sont irrégulières, il est très difficile, par

0001961

leur serrage dans la pince de la broche ou dans le mandrin du tour, d'obtenir des tolérances serrées et une concentricité suffisante sur les pièces terminées.

Ces invonvénients ont pour conséquence que des pièces ébauchées doivent être usinées sur deux machines, sur la première on usine alors une surface de référence permettant un serrage concentrique et régulier, et sur la deuxième machine l'on peut dès lors usiner la pièce dans de bonnes conditions. Il va de soit qu'une telle méthode est onéreuse puisqu'elle demande la mise en service de deux machines et une manutention compliquée.

Le procédé selon l'invention est caractérisé par le fait que les ébauches sont amenées dans le tour automatique dans le poste d'usinage secondaire pour une première opération, le tour transportant ensuite l'ébauche partiellement usinée dans le poste d'usinage principal.

L'avantage obtenu consiste à pouvoir usiner une surface de référence sur la pièce dans un poste secondaire disposant de peu d'outils, et de pouvoir terminer l'usinage dans le poste d'usinage principal avec, d'une part, la précision normale pouvant être obtenue par la machine en question, et d'autre part les outils plus nombreux dont dispose le poste d'usinage principal.

Les dessins annexés illustrent un exemple d'application de l'invention à l'aide d'un tour multibroche.

La fig. I montre une vue de face du bâti des broches d'un tour multibroche avec un poste principal et un poste secondaire pour utilisation normale.

La fig. II montre une vue identique avec les modifications pour l'utilisation selon l'invention.

Dans les deux figures le socle du tour automatique multibroche est désigné par 1, 2 désigne le bâti des broches dans lequel est logé le barillet 3 comportant les broches 4. Ce barillet avec les porte-outils 5 forme le poste d'usinage principal du tour. Le levier transporteur est désigné par 6. Le poste d'usinage secondaire se compose de l'adjonction 7 au bâti 2 et du disque indexable 8, qui, avec les mors 9 sert de porte-pièce.

Les figures I et II se différencient par le fait que la fig. II comporte en plus un chargeur de pièces se composant du magasin 10 et du levier de chargement 11. D'autre part, étant donné que le procédé selon l'invention peut être mieux réalisé, dans le cas d'un poste secondaire à élément indexable, en intervenant dans la cinématique de manière à indexer cet élément dans le sens contraire, la flèche de la fig. II indique un sens de rotation contraire à la fig. I.

L'utilisation normale d'un tour automatique multibroche avec poste principal et poste secondaire, telle qu'elle ressort de la fig. I, est connue. La pièce est usinée dans le poste principal à partir d'une barre dan; les différentes stations que parcourt le barillet. Dans la dernière position la pièce est coupée de la barre et saisie par le levier transporteur 6 qui l'ammène dans les mors 9 du disque indexable 8. Par indexage de ce disque la pièce est amenée à nouveau dans différentes positions de travail. Lorsque la pièce a parcouru le cycle complet elle est terminée et les mors 9 s'ouvrent.

L'utilisation d'un tel tour automatique multibroche selon l'invention et en se référant à l'exemple selon la fig. II, est par contre le suivant :
les ébauches de pièces sont stockées dans le magasin 10. Le levier de chargement 11 les amène dans les ;ors de serrage 9 du disque indexable 8. Par indexation du disque 8, l'ébauche est alors amenée dans les positions de travail où elle est usinée par des dispositifs non-représentées. Lorsque, par indexages successives, l'ébauche arrive en position pour le levier transporteur 6, celui-ci la saisit et la transporte dans la broche correspondante. Dans cette broche elle est serrée par la surface de référence usinée précédement et peut maintenant subir tous les usinages nécessaires pour la terminer.

0001961

- 1 -

# R E V E N D I C A T I O N

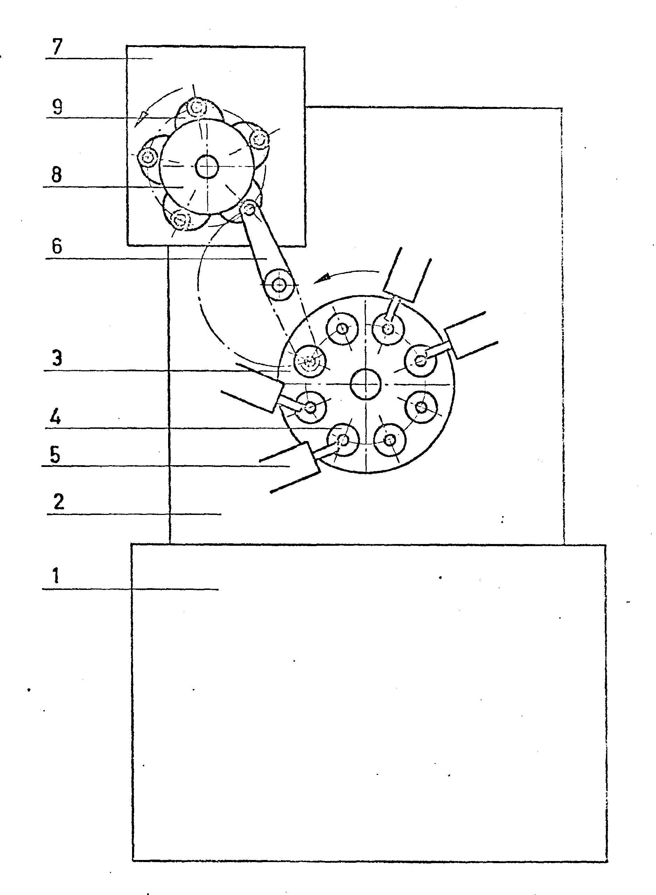

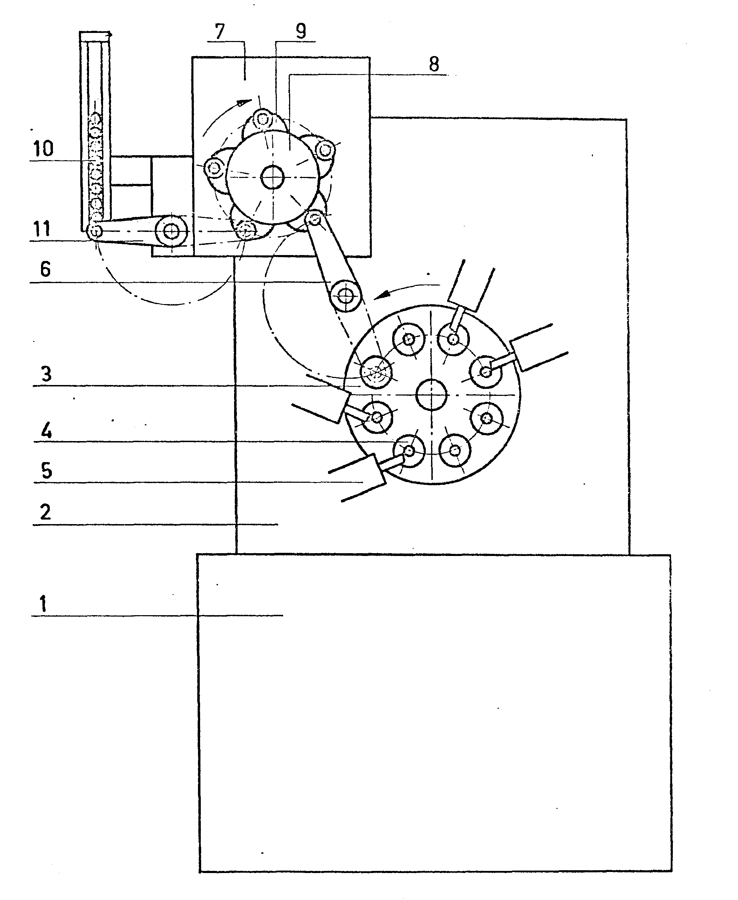

Procédé d'usinage, sur tour automatique comportant un poste d'usinage principal et un poste d'usinage secondaire, de pièces préalablement ébauchées, caractérisé par le fait que les ébauches sont amenées dans le tour automatique dans le poste d'usinage secondaire pour une première opération, le tour transportant ensuite l'ébauche partiellement usinée dans le poste d'usinage principal.

TORNOS S.A.

0001961 2/2

Fabrique de machines Moutier